# EUROPÄISCHE PATENTSCHRIFT

(11) **EP 3 103 729 B1**
(45) Veröffentlichungstag und Bekanntmachung des Hinweises auf die Patenterteilung: **22.08.2018**
(21) Anmeldenummer: 16174261.4
(22) Anmeldetag: 13.06.2016
(51) Int. Cl.: B65B 21/12, B65G 47/90

(54) **PACKTULPE UND VERFAHREN ZUM KOPFSEITIGEN ERGREIFEN VON FLASCHEN**
PACKING TULIP AND METHOD FOR GRIPPING THE HEADS OF BOTTLES
TULIPE DE PRÉHENSION ET PROCÉDÉ DE SAISIE DE BOUTEILLES CÔTÉ TÊTE

(30) Priorität: 13.06.2015 DE 102015007345
(43) Veröffentlichungstag der Anmeldung: 14.12.2016
(73) Patentinhaber: Zodrow, Rudolf, 40235 Düsseldorf (DE)
(72) Erfinder: Zodrow, Rudolf, 40235 Düsseldorf (DE); Rupprecht, Gregor, 40235 Düsseldorf (DE)
(74) Vertreter: Lotze, Rüdiger

(56) Entgegenhaltungen:
- EP-A2- 1 427 637
- DE-A1- 1 586 011
- DE-B- 1 216 183
- DE-U- 1 982 937
- DE-U1-202007 001 164

## Beschreibung

Die Erfindung betrifft eine Packtulpe zum Ergreifen von insbesondere durch einen Verschluss verschließbaren Flaschen mit einem topfförmigen Gehäuse und einem topfförmigen, elastisch verformbaren Greifeinsatz, wobei der Greifeinsatz einen rückseitigen Boden und ein vorderseitiges, dem zu ergreifenden Flaschenkopf zugewandtes Ende aufweist, wobei der Greifeinsatz über einen an seinem vorderseitigen Ende angeordneten radial nach außen weisenden Kragen an einem gehäusefesten Absatz abgestützt ist, wobei die Packtulpe Mittel zur Einleitung eines Druckmediums in ein zwischen der Innenwand des Gehäuses und der Außenwand des Greifeinsatzes angeordnetes Druckvolumen aufweist.

Packtulpen zum Ergreifen von Flaschen der vorstehenden oder ähnlicher Art sind in verschiedenen Ausführungen seit langem bekannt. Üblicherweise umfassen diese dabei ein topfförmiges Gehäuse und einen ebenfalls topfförmigen elastischen Greifeinsatz, der an seinem vorderseitigen, im Betrieb der Packtulpe dem Flaschenkopf zugewandten Rand an einem gehäusefesten radial nach innen weisenden Absatz abgestützt ist.

Die Packtulpen sind in der Regel mit anderen gleichartigen Packtulpen zu einer Gruppe in einem Packkopf zusammengefasst und dienen zum kopfseitigen Ergreifen von Flaschen in Flaschenverpackungsmaschinen. Durch den Packkopf werden die Packtulpen gemeinsam auf eine entsprechende Gruppe von Flaschen abgesenkt. Dabei tauchen die Flaschen mit ihren Köpfen in die einzelnen Packtulpen ein. Die Packtulpen sind dafür ausgelegt, bei entsprechender Ansteuerung die Flaschen durch radiale Klemmung des Flaschenkopfes mittels des sich unter Druckbeaufschlagung kontrolliert radial nach innen wölbenden elastischen Greifeinsatzes zu ergreifen. Die ergriffenen Flaschen einer Gruppe können dann mit dem Packkopf angehoben und versetzt werden, beispielsweise in einen mit Stellplätzen für die einzelnen Flaschen versehenen Kasten oder freistehend auf ein Transportband.

Für die Funktion der ansteuerbaren Packtulpen ist nicht nur wichtig, dass sie die Flaschen durch radiale Klemmung des Flaschenkopfes sicher ergreifen, sondern auch, dass das Ergreifen möglichst schonend erfolgt. Dies gilt vor allem dann, wenn der Flaschenkopf eine besondere Ausstattung aufweist, beispielsweise foliiert ist. Außerdem soll die Packtulpe möglichst nahe an ihrem vorderen Ende den Flaschenkopf erfassen, so dass der Flaschenkopf nur wenig in die Packtulpe einzutauchen braucht, um sicher und möglichst ohne Nachpendeln des Flaschenkörpers ergriffen werden zu können, aber auch um die Flasche schnell freizugeben, was vor allem beim Aufsetzen freistehender Flaschen, insbesondere leerer Kunststoffflaschen, auf ein Transportband die Gefahr des Umkippens vermindert.

In abweichenden Ausgestaltungen der Packtulpen (z.B. WO 2008/055893 A1) umfassen diese neben dem topfförmigen Gehäuse einen hülsenförmigen, elastisch verformbaren Greifeinsatz und einen auf den Einsatz an dessen rückseitigem Ende mit einer axialen Druckkraft einwirkenden Stellkolben. Oftmals sind weitere Komponenten vorgesehen, wie z.B. eine in das Gehäuse eingeschobene Führungshülse, die gleichzeitig als mechanischer Anschlag für den Stellkolben fungiert. Zwar zeichnen sich derartige Konstruktionen durch insgesamt günstige Greifeigenschaften aus, jedoch sind diese Packtulpen durch einen relativ komplizierten, mehrteiligen Aufbau gekennzeichnet, was zu erhöhten Fertigungskosten und Wartungszeiten führt, da der Zusammenbau und die Demontage der Packtulpen einen vergleichsweise hohen Aufwand erfordert.

In der aus der DE-AS 1 216 183 bekannten Packtulpe sind sowohl das Gehäuse als auch ein im Gehäuse aufgenommener elastischer Greifeinsatz topfförmig ausgebildet. Dabei ist der Greifeinsatz über einen an seinem vorderseitigen Ende angeordneten radial nach außen weisenden Kragen an einem gehäusefesten Absatz abgestützt. Ferner weist die Packtulpe Mittel in Form eines Luftrohres zur Einleitung eines Druckmediums in ein zwischen der Innenwand des Gehäuses und der Außenwand des Greifeinsatzes angeordnetes Druckvolumen auf. Die Wandung des Greifeinsatzes weist zudem über den Umfang verteilte speziell geformte "Warzen" auf, durch welche ein scharfkantiges Falten des Greifeinsatzes bei Druckbeaufschlagung verhindert werden soll. Trotz dieser Warzen ist das Verformungsverhalten dieser Packtulpe nicht optimal. Darüber hinaus erfordert die Verformung des Greifeinsatzes verhältnismäßig hohe Betriebsdrücke.

Aus der Praxis sind ferner Packtulpen bekannt, die ein topfförmiges Gehäuse und einen ebenfalls topfförmigen, elastisch verformbaren Greifeinsatz umfassen. Bei dieser Ausgestaltung, welche ohne Stellkolben auskommt, wird das Druckmedium in das gesamte Gehäuse, somit auch in einen ringförmigen Spalt zwischen der Wand des Gehäuses und des Greifeinsatzes, eingeleitet. Bei Einleitung eines Druckmediums, in der Regel Druckluft, verformt sich somit der elastische Greifeinsatz besonders gleichmäßig, wodurch die Flasche gegriffen wird. Weitere Ausgestaltungen von Packtulpen mit topfförmigen, elastisch verformbaren Einsätzen sind beispielsweise in den Druckschriften US 3,831,995, DE 7035246 U oder DE 30 25 091 C2 beschrieben.

Der Erfindung liegt die Aufgabe zugrunde, eine Packtulpe und ein Verfahren zum Ergreifen von Flaschen anzugeben, welcher durch ein verbessertes Verformungsverhalten ein schonendes und doch sehr sicheres Ergreifen der Flaschen erlaubt, wobei die Packtulpe zudem einfach konstruiert ist und eine ebenso einfachen Zusammenbau ermöglicht.

Die Aufgabe wird erfindungsgemäß mit einem topfförmigen, elastisch verformbaren Greifeinsatz nach dem Oberbegriff des Patentanspruches 1 dadurch gelöst, dass die zwischen den Enden angeordnete Wand des hülsenförmigen Greifeinsatzes eine Mehrzahl über den Umfang des Greifeinsatzes verteilter, in axialer Richtung sich erstreckender, außenseitiger Stege umfasst, wobei sich die axialen Stege über den Umfang des Greifeinsatzes mit geschwächten Bereichen abwechseln, wobei die die axialen Stege derart gegenüber dem Kragen radial zurückversetzt sind, dass sich zwischen der Innenwand des Gehäuses und der Außenwand des Greifeinsatzes ein durchgehendes Ringvolumen ausbildet, wobei der rückseitige Boden des Greifeinsatzes gegenüber dem Boden des topfförmigen Gehäuses axial beweglich ausgebildet ist..

Der besondere Vorteil der erfindungsgemäßen Packtulpe liegt darin, dass durch die gleichmäßige Druckbeaufschlagung über den gesamten Umfang des Greifeinsatzes durch das in das zwischen der Innenwand des Gehäuses und der Außenwand des Greifeinsatzes vorgesehene durchgehende Ringvolumen ein besonders vorteilhaftes Verformungsverhalten erreicht wird. Dabei wird durch die alternierende Ausbildung von axialen Stegen und geschwächten Bereichen über den Umfang in einem ersten Schritt die Flasche zunächst von den Wandabschnitten der geschwächten Bereiche vorgegriffen, wobei bei weiter steigendem Druck im Ringvolumen sich anschließend auch die axialen Stege radial einwärts verformen und einen sicheren Halt der Flasche in der Packtulpe gewährleisten. Geometrisch weist das Ringvolumen im Querschnitt der Packtulpe eine gestufte periodische Struktur auf, wobei der Abstand bzw. die Spaltbreite zwischen den Außenflächen der axialen Stege und der Innenwand des Gehäuses minimal und der Abstand bzw. die Spaltbreite zwischen den Außenflächen der geschwächten Bereiche und der Innenwand des Gehäuses maximal ist.

Nach einer bevorzugten Ausgestaltung beträgt die Spaltbreite zwischen den Außenflächen der axialen Stege und der Innenwand des Gehäuses 0,2 - 1,2 mm.

Es versteht sich, dass die Vorteile der erfindungsgemäßen Lösung nicht nur bei Flaschen, sondern bei beliebigen zu ergreifenden Gegenständen, deren äußere Form ein Ergreifen durch den hülsenförmigen Greifeinsatz zumindest prinzipiell erlaubt, zum Tragen kommen.

Nach einer Ausgestaltung der Erfindung sind die Mittel zur Einleitung eines Druckmediums als eine Mehrzahl in den rückseitigen Boden eingeformter Nuten ausgebildet, wobei die Nuten bevorzugt direkt in die geschwächten Bereiche des Greifeinsatzes übergehen, so dass eine strömungswiderstandsarme Befüllung des Ringvolumens mit dem Druckmedium, in der Regel Druckluft, möglich ist.

Erfindungsgemäß weist der Greifeinsatz sich über seinen Umfang abwechselnde außenseitige axiale Stege und geschwächte Bereiche auf. Nach einer weiteren vorteilhaften Ausgestaltung der Erfindung umfassen die geschwächte Bereiche jeweils zwei sich an die jeweils benachbart angeordneten axialen Stege anschließende axiale Außenabschnitte und einen dazwischen angeordneten axialen Mittenabschnitt, wobei die jeweilige Wandstärke der axialen Außenabschnitte geringer ist als die Wandstärke des Mittenabschnitts. Durch die geringe Wandstärke bei den axialen Außenabschnitten wird dort eine leichte Verformbarkeit erreicht, während die höhere Wandstärke des im Betrieb des Greifeinsatzes mit der Flasche in Kontakt stehenden Mittenabschnitts diesen gegenüber der Oberfläche der Flasche hinreichend robust und mechanisch widerstandsfähig macht. Hierdurch wird eine lange Lebensdauer des Greifeinsatzes ermöglicht.

Eine leichte Verformbarkeit des elastischen Greifeinsatzes der Packtulpe birgt stets das Risiko, dass der Greifeinsatz im Betrieb der Packtulpe unbeabsichtigt durch das Druckmedium aus dem Gehäuse gedrückt wird, wodurch die Packtulpe nicht mehr funktionstüchtig ist. Um diesem Effekt bei unverändert leichter Verformbarkeit des Greifeinsatzes entgegenzuwirken, ist nach einer weiteren vorteilhaften Ausgestaltung der Erfindung vorgesehen, dass in den geschwächten Bereichen dreieckige Verstärkungselemente angeordnet sind, welche auf dem Kragen in axial rückwärtiger Richtung aufsitzen. Diese begrenzen durch ihre Form die maximale radiale Verformbarkeit des Greifeinsatzes unter Druckbeaufschlagung, indem die am Kragen ansetzenden Dreiecksflanken zunächst zwar eine leichte Verformbarkeit zulassen, der hohe Mittenbereich des Dreiecks jedoch durch seinen aussteifenden Effekt eine übermäßige Verformung verhindert.

Durch die Abstützung des elastischen Greifeinsatzes über einen an seinem vorderseitigen Ende angeordneten radial nach außen weisenden Kragen an einem gehäusefesten Absatz wird bereits eine gute Dichtwirkung derart erzielt, dass kein Druckmedium in Richtung der zu greifenden Flasche aus der Packtulpe entweichen kann. Um diese Dichtwirkung entscheidend zu verbessern ist nach einer besonders vorteilhaften Ausgestaltung der Erfindung vorgesehen, dass der Kragen einen radial außenseitig angeordneten Ringabschnitt umfasst, welcher derart mit dem Gehäuse in Form einer Einklemmung zusammenwirkt, dass er das Ringvolumen zum vorderseitigen Ende des Greifeinsatzes hin abdichtet.

Nach einer weitergehenden Ausgestaltung weist zudem das Gehäuse einen topfförmigen Hauptabschnitt und ein mit dem Hauptabschnitt lösbar verbundenes, insbesondere als Überwurfmutter ausgebildetes, ringförmiges Sicherungselement auf, wobei der gehäusefeste Absatz an dem Sicherungselement ausgebildet ist, wobei der radial außenseitig angeordnete Ringabschnitt des Kragens zwischen vorderem Rand des topfförmigen Hauptabschnitts und dem Sicherungselement eingespannt ist. Bevorzugt ist dabei der gehäusefeste Absatz des Sicherungselements derart als radial einwärtig angeordneter, konischer Ringabschnitt ausgebildet ist, dass er sich in den Ringabschnitt des Kragens zum Zwecke der Abdichtung nach Art eines Dorns eindrückt. Durch diese besondere Art des Kraftschlusses wird einerseits eine exzellente Abdichtwirkung erzielt. Ferner wird der Greifeinsatz auch in einer optimalen radialen Position in Relation zum umgebenden Gehäuse gehalten.

Der radial außenseitig angeordnete Ringabschnitt des Kragens des Greifeinsatzes kann unterschiedliche Geometrien aufweisen. Nach einer ersten Ausgestaltung weist der Ringabschnitt einen im Wesentlichen rechteckigen Querschnitt auf. Dieser ist einfach zu fertigen und gewährleistet eine gute Dicht- und Klemmwirkung. Nach einer besonders bevorzugten Ausgestaltung ist der radial außenseitig angeordnete Ringabschnitt derart geformt, dass sich die axiale Dicke des Ringabschnitts radial nach außen stetig vergrößert unter Ausbildung eines dem rückseitigen Boden des Greifeinsatzes zugewandten Innenkonus. Hierdurch wird insbesondere eine exzellente Klemmwirkung erzielt, da eine unbeabsichtigte radial einwärtige Bewegung des Kragens, was unmittelbar zu einem Herausrutschen des Greifeinsatzes führen kann, sicher verhindert wird. Bevorzugt hat das Gehäuse dabei eine zu dem Innenkonus korrespondierende Form.

Um auch die Dichtwirkung des radial außenseitig am Kragen angeordneten Ringabschnitts zu optimieren ist nach einer besonders bevorzugten Ausgestaltung der Erfindung vorgesehen, dass der radial außenseitig am Kragen angeordnete Ringabschnitt in axialer Verlängerung einen Dichtwulst aufweist. Dieser im Längsschnitt des Greifeinsatzes leicht ballig geformte Ringwulst wird beim Einklemmen des Ringabschnitts im Gehäuse derart komprimiert, dass er jede Unregelmäßigkeit in der Geometrie von Gehäuse und Greifeinsatz ausgleicht und somit für eine nahezu perfekte Dichtwirkung sorgt. Ferner verhindert der Dichtwulst ein Aufdrehen eines als Überwurfmutter ausgebildeten Sicherungselements.

Neben dem vorstehenden sind weitere Geometrien des Ringabschnitts möglich. Besonders bevorzugt wird hierbei auch ein T-förmiges Profil, derart, dass sich an das äußere Ende des Ringabschnitts beidseitig Endabschnitte in axialer Richtung anschließen.

Alternativ oder ergänzend zu dem vorstehenden kann die Abdichtung des Ringvolumens in Richtung der zu ergreifenden Flasche auch dadurch verbessert werden, dass der Greifeinsatz benachbart zum Kragen an seiner Außenseite seiner Wand eine umlaufende Dichtlippe aufweist. Diese steht bevorzugt schräg von der Außenseite der Wand des Greifeinsatzes ab und ist ferner bevorzugt mit dem Greifeinsatz einstückig ausgebildet. Im eingebauten Zustand des Greifeinsatzes legt sie sich dichtend an die Innenseite der Wand des Greifeinsatzes an, wobei sie zum Zwecke einer verbesserten Elastizität bevorzugt dünnwandig ausgebildet ist.

Die Packtulpe der vorliegenden Erfindung kann auch für Bügelverschlussflaschen zum Einsatz kommen, deren sichere Handhabung in der Getränketechnik stets eine besondere Herausforderung darstellt. Hierzu ist nach einer vorteilhaften Ausgestaltung der Erfindung vorgesehen, dass die Innenfläche der Wand des Greifeinsatzes im Bereich des Kragens zum Zwecke des Fixierens des Bügels einer Bügelverschlussflasche eine axiale Zahnstruktur aufweist. Die Packtulpe ist bevorzugt derart dimensioniert, dass im Betrieb der Packtulpe nur die radial nach innen weisenden Oberseiten der Zähne der Zahnstruktur, die naturgemäß eine Verstärkung der Wandstärke des Greifeinsatzes bilden, im Kontakt mit dem Bügel der Bügelverschlussflasche stehen, so dass eine Verletzung der Wand des Greifeinsatzes im Bereich der Täler der Zahnstruktur, wo die Wandstärke minimal ist, sicher vermieden wird.

Nach einer weitergehenden vorteilhaften Ausgestaltung der Erfindung weist dabei die axiale Zahnstruktur eine Mehrzahl gleichmäßig über den Umfang der Innenfläche des Greifeinsatzes verteilter, die Zahnstruktur radial nach innen überragender Verstärkungsrippen auf, wobei jedem außenseitigen Steg auf der Innenseite des Greifeinsatzes jeweils mittig eine Verstärkungsrippe zugeordnet ist. Dabei ist es besonders bevorzugt, wenn sich die Höhe der Verstärkungsrippen in radialer Richtung vom Kragen in Richtung des rückseitigen Bodens des Greifeinsatzes zumindest im Bereich der Zahnstruktur kontinuierlich vergrößert. Hierdurch wird eine sehr gute Vorzentrierung beim Einführen des Kopfes der Bügelverschlussflasche erzielt. Eine abschließende Zentrierung im Bereich des Porzellanstopfens kann dann durch eine spezielle an die Form und Durchmesser des Stopfens angepasste Aussparung im Boden des Greifeinsatzes bewirkt werden.

Ein weiterer Aspekt der vorliegenden Erfindung betrifft ein System zum kopfseitigen Ergreifen von insbesondere durch einen Verschluss verschließbaren Flaschen mit wenigstens einer Packtulpe nach einem der Ansprüche 1 bis 13. Zu den Vorteilen dieses Systems wird auf das Vorstehende verwiesen.

Ein weiterer Aspekt der Erfindung betrifft ein Verfahren zum kopfseitigen Ergreifen einer Flasche mithilfe einer Packtulpe gemäß dem Oberbegriff des Patentanspruches 14.

Das Verfahren ist dadurch gekennzeichnet, dass die zwischen den Enden des Greifeinsatzes angeordnete Wand des hülsenförmigen Greifeinsatzes eine Mehrzahl über den Umfang des Greifeinsatzes verteilter, in axialer Richtung sich erstreckender, außenseitiger Stege umfasst, wobei sich die axialen Stege über den Umfang des Greifeinsatzes mit geschwächten Bereichen abwechseln, wobei die axialen Stege (13) derart gegenüber dem Kragen (15) radial zurückversetzt sind, dass sich zwischen der Innenwand des Gehäuses und der Außenwand des Greifeinsatzes ein durchgehendes Ringvolumen (30) ausbildet und wobei der rückseitige Boden (11) des Greifeinsatzes (10) gegenüber dem Boden des topfförmigen Gehäuses (20) axial beweglich ausgebildet ist, wobei in einem ersten Verfahrensschritt bei Einleitung des Druckmediums sich zunächst die geschwächten Bereiche radial einwärtig verformen und an den zu greifenden Flaschenhals anlegen, während sich die axialen Stege annähernd noch in der Ausgangsstellung befinden, und wobei in einem zweiten Verfahrensschritt bei weiterer Erhöhung des Drucks im Druckmedium auch die axialen Stege radial einwärtig an den Flaschenhals heranrücken.

Der besondere Vorteil des erfindungsgemäß Verfahrens liegt darin, dass die zu ergreifende Flasche im ersten Schritt zunächst vorzentriert und in die gewünschte lotrechte Position gebracht werden kann, während noch keine großen Haltekräfte wirken, während im zweiten Schritt ein sicheres und schonendes Ergreifen bei unveränderter Positionierung der Flasche relativ zur Packtulpe erreicht werden kann.

Im Folgenden wird die Erfindung anhand einer einem Ausführungsbeispiel darstellenden Zeichen näher erläutert. Es zeigen:
- Fig. 1: eine Packtulpe zum kopfseitigen Ergreifen von Flaschen in einer ersten Ausführungsform im Längsschnitt und einer Ausschnittsvergrößerung des Längsschnitts,
- Fig. 2a-d: den elastischen Greifeinsatz der Packtulpe der Fig. 1 in Seitenansicht, im Längsschnitt, in Draufsicht und im Querschnitt entlang Schnittlinie B-B aus Fig. 2a,
- Fig. 3: den Greifeinsatz der Fig. 1 im vergrößerten Querschnitt entlang Schnittlinie B-B aus Fig. 2a,
- Fig. 4a-c: die Packtulpe der Fig. 1 in perspektivischer Längsschnittansicht sowie den Greifeinsatz der Packtulpe der Fig. 1 in zweifacher perspektivischer Ansicht,
- Fig. 5a,b: eine Packtulpe zum kopfseitigen Ergreifen von Flaschen in einer zweiten Ausführungsform im Längsschnitt und im Querschnitt entlang Schnittlinie C-C aus Fig. 5a,
- Fig. 6a,b: den Greifeinsatz der Packtulpe der Fig. 5 im Längsschnitt und in Seitenansicht,
- Fig. 7a-c: die Packtulpe der Fig. 1 im Querschnitt in drei unterschiedlichen Betriebsstellungen,
- Fig. 8: eine Packtulpe zum kopfseitigen Ergreifen von Flaschen in einer dritten Ausführungsform im Längsschnitt,
- Fig. 9: eine Packtulpe zum kopfseitigen Ergreifen von Flaschen in einer vierten Ausführungsform im Längsschnitt,
- Fig. 10a-h: verschiedene Packtulpen zum kopfseitigen Ergreifen von Flaschen sowie die dazugehörigen Greifeinsätze in einer Ausschnittsansicht ihres Längsschnitts,
- Fig. 11: eine Packtulpe zum kopfseitigen Ergreifen von Flaschen in einer fünften Ausführungsform, die für das kopfseitige Ergreifen von Bügelverschlussflaschen optimiert ist, im Längsschnitt,
- Fig. 12: die Packtulpe der Fig. 11 in einer geringfügig modifizierten Form im Längsschnitt,
- Fig. 13a,b: den Greifeinsatz der Packtulpe aus Fig. 11 ohne Zentrierzapfen der Fig. 11 in Seitenansicht und in Draufsicht und
- Fig. 14a-c: den Greifeinsatz der Packtulpe aus Fig. 11 in Längsschnittansicht sowie in zwei Querschnittansichten entlang den Schnittlinien A-A und B-B der Fig. 14a.

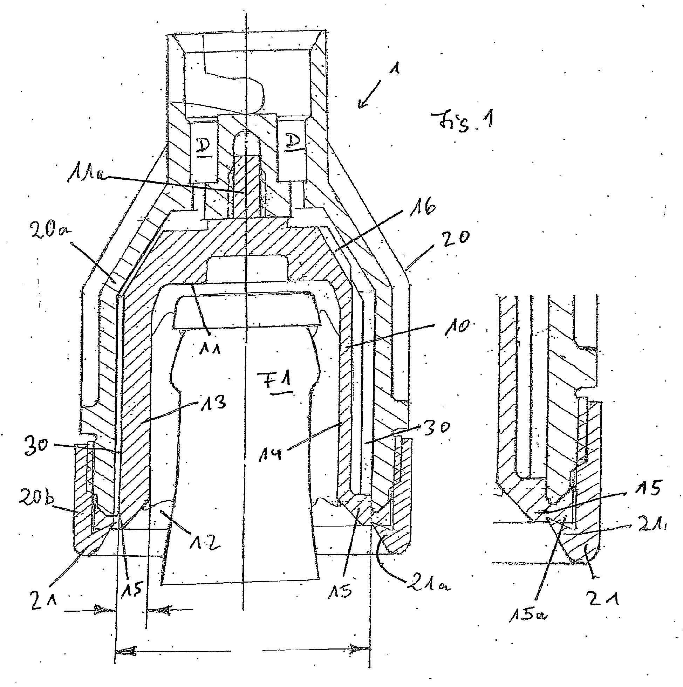

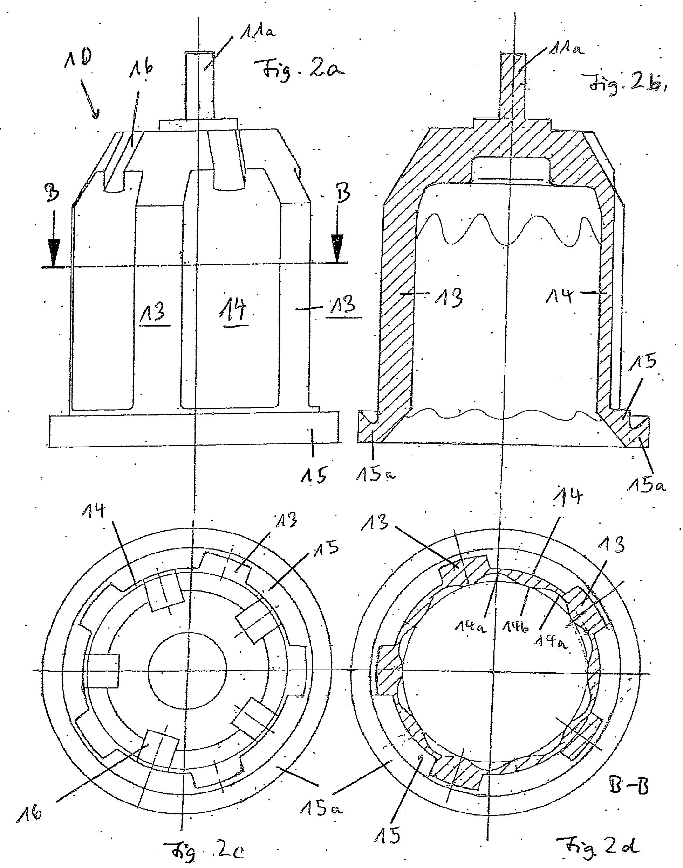

Fig. 1 zeigt eine Packtulpe 1 zum kopfseitigen Ergreifen von insbesondere durch einen Verschluss verschließbaren Flaschen, vorliegend einer Langhalsflasche F1 mit Kronkorkenverschluss, in einer ersten Ausführungsform im Längsschnitt sowie mit zusätzlicher Ausschnittvergrößerung. Die Packtulpe 1 umfasst ein topfförmiges Gehäuse 20 und einen topfförmigen, elastischen Greifeinsatz 10, welcher über eine Verstärkungskragen 15 an einem gehäusefesten Absatz 21 abgestützt ist. Der Greifeinsatz 10 seinerseits weist einen rückseitigen Boden 11 und ein vorderseitiges, dem zu ergreifenden Flaschenkopf zugewandtes Ende 12 auf, wobei die zwischen den Enden 11, 12 angeordnete Wand des hülsenförmigen Greifeinsatzes 10 eine Mehrzahl über den Umfang des Greifeinsatzes 10 verteilter, in axialer Richtung sich erstreckender, außenseitiger Stege 13 umfasst. Die axialen Stege 13 wechseln sich über den Umfang des Greifeinsatzes 10 mit geschwächten Bereichen 14 ab. Diese Geometrie ist insbesondere in den Querschnittansichten der Fig. 2 zu erkennen.

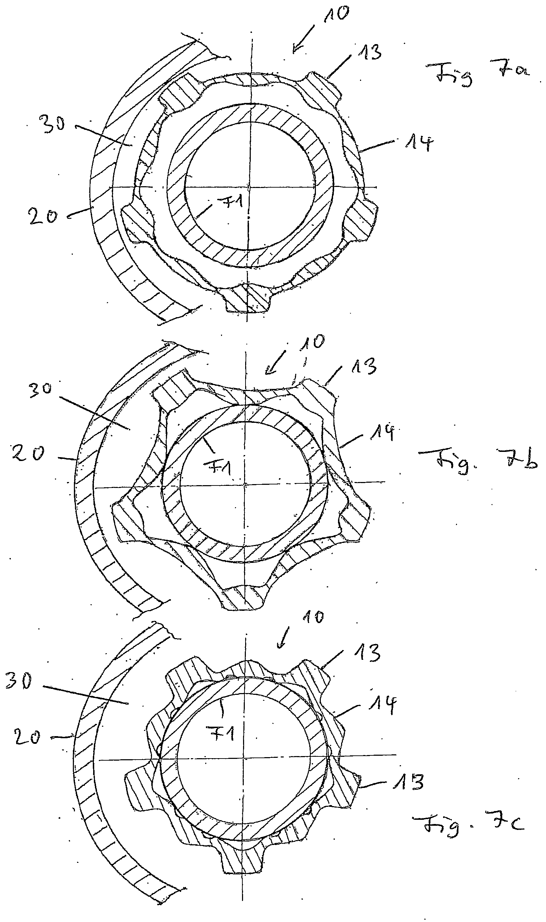

Die Packtulpe weist ferner Mittel 16 zur Einleitung eines Druckmediums in ein zwischen der Innenwand des Gehäuses 20 und der Außenwand des Greifeinsatzes 10 angeordnetes Druckvolumen auf. Diese Mittel 16 sind vorliegend als eine Mehrzahl in den rückseitigen Boden 11 des Greifeinsatzes 10 eingeformter Nuten 16 ausgebildet, wobei die Nuten 16 bevorzugt direkt in die geschwächten Bereiche 14 des Greifeinsatzes 10 übergehen, so dass eine strömungswiderstandsarme Befüllung des Ringvolumens 30 mit dem Druckmedium, in der Regel Druckluft, möglich ist. Bei der Packtulpe der Fig. 1 ist ferner vorgesehen, dass die axialen Stege 13 derart gegenüber dem Kragen 15 radial zurückversetzt sind, dass sich zwischen der Innenwand des Gehäuses und der Außenwand des Greifeinsatzes ein durchgehendes Ringvolumen 30 ausbildet. Durch die gleichmäßige Druckbeaufschlagung über den gesamten Umfang des Greifeinsatzes 10 durch das in das zwischen der Innenwand des Gehäuses 20 und der Außenwand des Greifeinsatzes 10 vorgesehene durchgehende Ringvolumen 30 wird ein besonders vorteilhaftes Verformungsverhalten erreicht, wie im Zusammenhang mit Fig. 7 noch näher erläutert wird. Geometrisch weist das Ringvolumen 30 im Querschnitt der Packtulpe 10 eine gestufte periodische Struktur auf, wobei der Abstand bzw. die Spaltbreite zwischen den Außenflächen der axialen Stege 13 und der Innenwand des Gehäuses 20 minimal und der Abstand bzw. die Spaltbreite zwischen den Außenflächen der geschwächten Bereiche 14 und der Innenwand des Gehäuses 20 maximal ist. Bevorzugt beträgt die Spaltbreite zwischen den Außenflächen der axialen Stege und der Innenwand des Gehäuses 0,2 - 1,2 mm.

Wie ferner in der Längsschnittansicht der Packtulpe der Fig. 1 erkennbar, umfasst der Kragen 15 einen radial außenseitig angeordneten Ringabschnitt 15a, welcher derart mit dem Gehäuse 20 in Form einer Einklemmung zusammenwirkt, dass er das Ringvolumen 30 zum vorderseitigen Ende 12 des Greifeinsatzes hin abdichtet.

Hierzu weist das Gehäuse 20 der Packtulpe 1 seinerseits einen topfförmigen Hauptabschnitt 20a und ein mit dem Hauptabschnitt 20a lösbar verbundenes, insbesondere als Überwurfmutter ausgebildetes, ringförmiges Sicherungselement 20b auf, wobei der gehäusefeste Absatz 21 an dem Sicherungselement 20b ausgebildet ist, während das Ringvolumen 30 gänzlich zwischen der Innenwand des Hauptabschnittes 20a des Gehäuses 20 und der Außenseite der Wand des Greifeinsatzes 10 ausgebildet ist. Der radial außenseitig angeordnete Ringabschnitt 15a des Kragens 15 ist nun zwischen dem Sicherungselement 20b und dem äußeren Rand des topfförmigen Hauptabschnitts 20a des Gehäuses 20 eingeklemmt und übernimmt somit eine zuverlässige Dichtfunktion, wodurch kein Druckmedium in Richtung der zu greifenden Flasche aus der Packtulpe 1 entweichen kann.

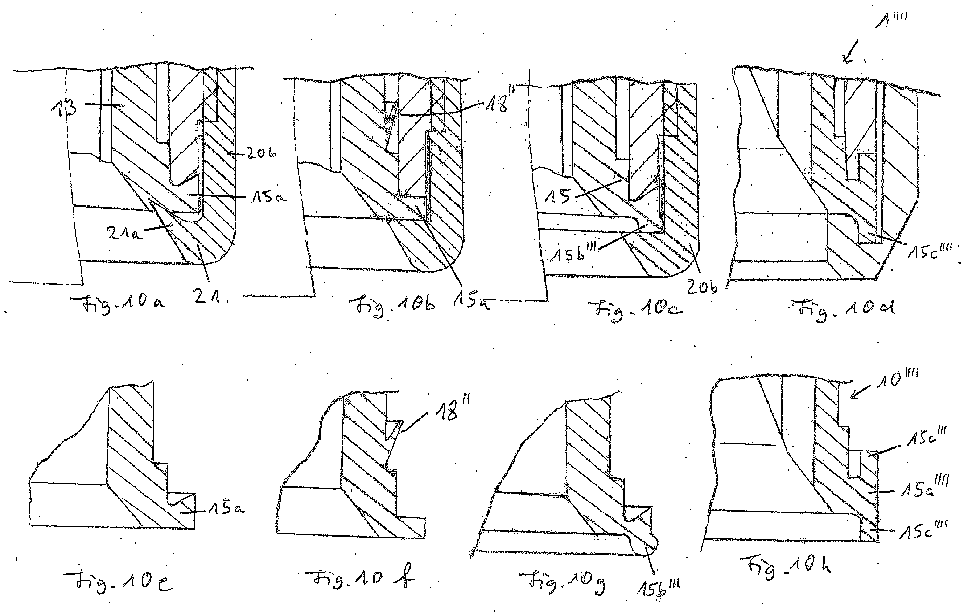

Der der radial außenseitig angeordnete Ringabschnitt 15a des Kragens 15 kann unterschiedlich geformt sein, wie insbesondere in Fig. 10 gezeigt. Vorliegend ist er derart geformt, dass sich die axiale Dicke des Ringabschnitts 15a unter Ausbildung eines dem rückseitigen Boden 11 des Greifeinsatzes 10 zugewandten Innenkonus radial nach außen stetig vergrößert. Hierdurch wird insbesondere eine exzellente Klemmwirkung erzielt, da eine unbeabsichtigte radial einwärtige Bewegung des Kragens 15, was unmittelbar zu einem Herausrutschen des Greifeinsatzes 10 aus der Packtulpe1 führen kann, sicher verhindert wird. Wie vorliegend, hat der äußere Rand des Hauptabschnitts 20a Gehäuses 20 dabei bevorzugt eine zu dem Innenkonus korrespondierende Form.

Wie insbesondere in der Ausschnittsvergrößerung der Fig. 1 erkennbar, ist vorliegend der gehäusefeste Absatz 21 des Sicherungselements 20b derart als radial einwärtig angeordneter, konischer Ringabschnitt 21a ausgebildet, dass er sich in den radial außenseitig angeordneten Ringabschnitt 15a des Kragens 15 zum Zwecke der Abdichtung nach Art eines Dorns eindrückt. Durch diese besondere Art des Kraftschlusses wird einerseits eine exzellente Abdichtwirkung erzielt. Ferner wird der Greifeinsatz auch in einer optimal zentrierten radialen Position in Relation zum umgebenden Gehäuse gehalten.

Weiterhin umfasst der Greifeinsatz 10 der Packtulpe 1 der Fig. 1 an seinem rückseitigen Boden 11 außenseitig einen Zentrierzapfen 11a. Nicht erfindungsgemäß ist das hier gezeigte Merkmal, wonach der Zentrierzapfen 11a mit Außengewinde ausgebildet ist, wie in Fig. 1 gezeigt, mittels dessen der Greifeinsatz 10 über ein korrespondierendes Innengewinde in das Gehäuse 20 eingeschraubt ist. Hierdurch wird der Greifeinsatz 10 in dem Gehäuse einfach zentriert und insbesondere bei Vorsehen eines Gewindes auch wirksam gesichert.

Fig. 2 zeigt den elastischen Greifeinsatz 10 der Packtulpe 1 der Fig. 1 in Seitenansicht, im Längsschnitt, in Draufsicht und im Querschnitt. Insbesondere bei letzterem ist erkennbar, dass jeder geschwächte Bereich 14 zwei sich an die jeweils benachbart angeordneten axialen Stege 13 anschließende axiale Außenabschnitte 14a und einen dazwischen angeordneten axialen Mittenabschnitt 14b aufweist, wobei die jeweilige Wandstärke der axialen Außenabschnitte 14a geringer ist als die Wandstärke des Mittenabschnitts 14b. Durch die geringe Wandstärke bei den axialen Außenabschnitten 14a wird dort eine leichte Verformbarkeit erreicht, während die höhere Wandstärke des im Betrieb des Greifeinsatzes 10 mit der Flasche in Kontakt stehenden Mittenabschnitts 14b diesen gegenüber der Oberfläche der Flasche hinreichend robust und mechanisch widerstandsfähig macht. Hierdurch wird eine lange Lebensdauer des Greifeinsatzes 10 ermöglicht und eine lotgerechte Zentrierung der Flasche F1 erreicht.

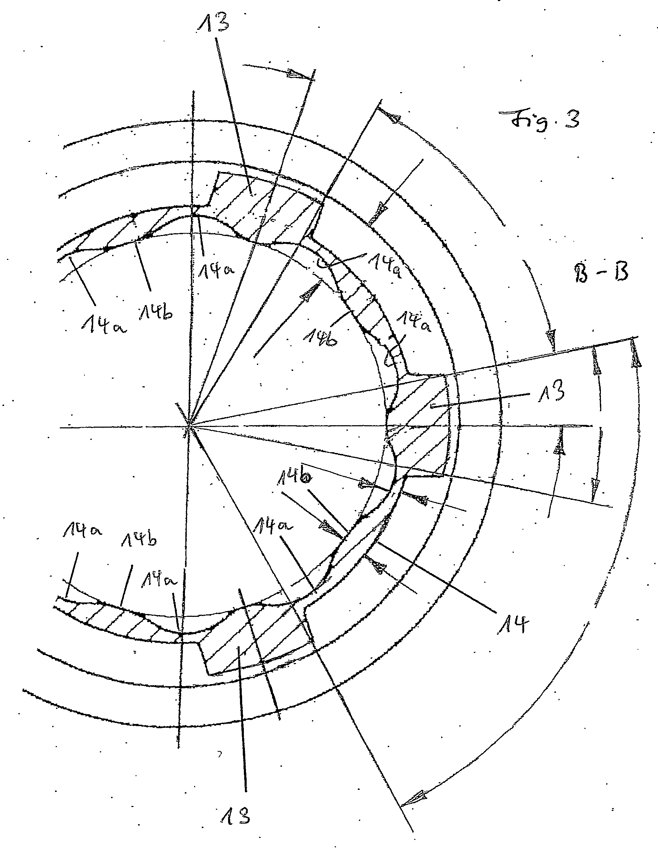

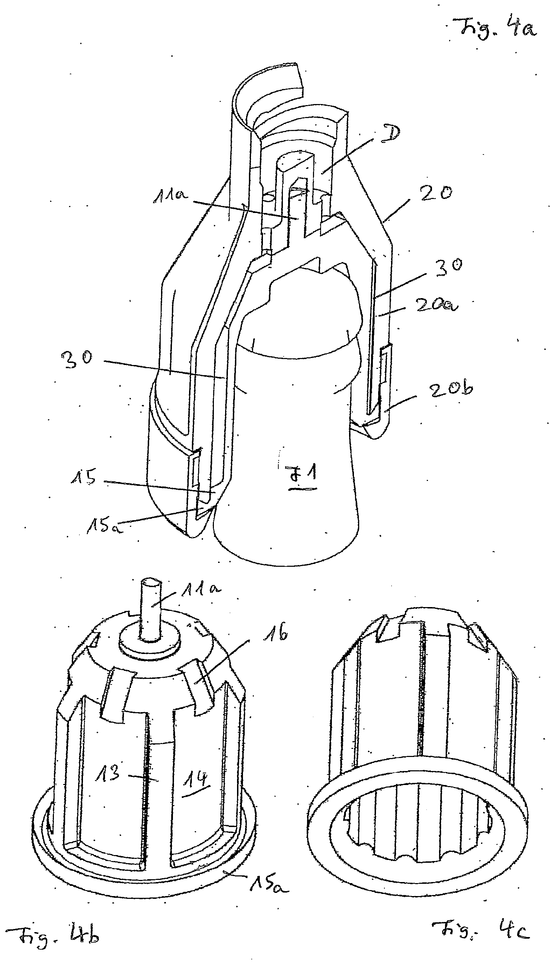

Die Fig. 3 und 4a-c zeigen den Greifeinsatz der Fig. 1 im vergrößerten Querschnitt entlang Schnittlinie B-B aus Fig. 2a bzw. die Packtulpe der Fig. 1 in perspektivischer Längsschnittansicht sowie den Greifeinsatz der Packtulpe der Fig. 1 in zweifacher perspektivischer Ansicht.

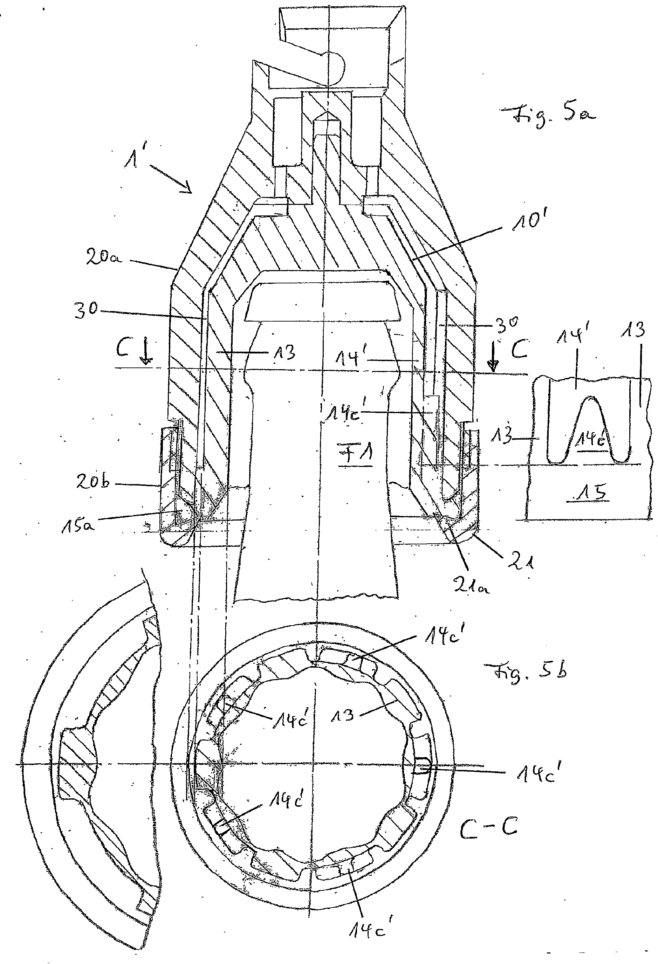

Fig. 5 zeigt eine Packtulpe 1' zum kopfseitigen Ergreifen von Flaschen F1 in einer zweiten Ausführungsform im Längsschnitt und im Querschnitt entlang Schnittlinie C-C aus Fig. 5a. Gleiche Elemente mit im Vergleich zur Packtulpe 1 der Fig. 1 identischer Funktion tragen gleiche Bezugszeichen.

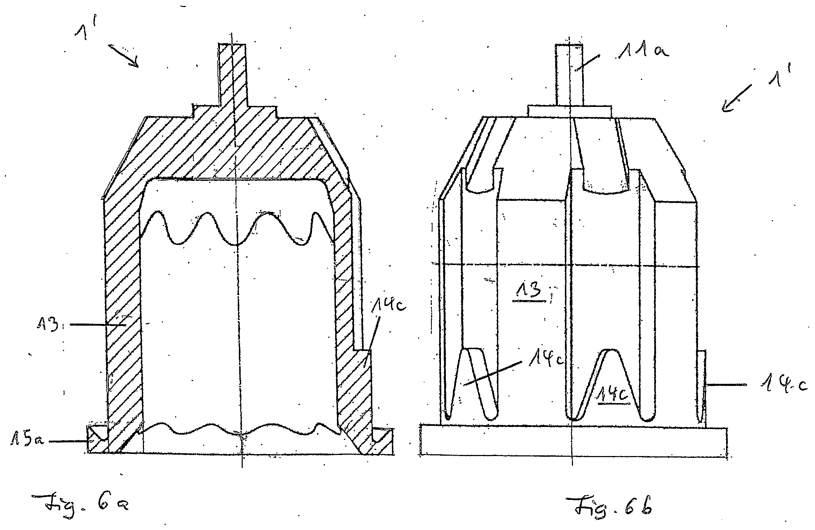

Der wesentliche Unterschied zwischen der Packtulpe 1 der Fig. 1 und der Packtulpe 1' der Fig. 5 besteht darin, dass in den geschwächten Bereichen 14' des Greifeinsatzes 10' der Packtulpe 1'dreieckige Verstärkungselemente 14c' angeordnet sind, welche auf dem Kragen 15 in axial rückwärtiger Richtung aufsitzen. Diese dienen dazu, ein unbeabsichtigtes Herausrutschen des Greifeinsatzes 10' aus dem Gehäuse 20 der Packtulpe 1' wirksam zu verhindern, indem die dreieckigen Verstärkungselemente 14c' durch ihre Form die maximale radiale Verformbarkeit des Greifeinsatzes 10' unter Druckbeaufschlagung begrenzen. Dies wird konkret dadurch erreicht, dass die am Kragen 15 ansetzenden Dreiecksflanken zunächst zwar eine leichte Verformbarkeit zulassen, der hohe Mittenbereich des dreieckigen Verstärkungselements 14c' jedoch durch seinen aussteifenden Effekt eine übermäßige Verformung verhindert. Dieser vorteilhafte Effekt kommt insbesondere dann zum Tragen, wenn die Packtulpe 1' ausnahmsweise im "Leerlauf" betrieben wird, d.h. bei voller Druckbeaufschlagung des Greifeinsatzes 10' keine Flasche in die Packtulpe 1' eingeführt ist. Hierbei kommt es mangels Anlagefläche in Form des Flaschenhalses ohne die Verstärkungselemente 14c' zu einer übermäßigen Verformung, was letztlich zu einem Herausrutschen des Greifeinsatzes führen kann. Die auf dem Verstärkungskragen 15 aufsitzenden dreieckigen Verstärkungselemente 14c' sind insbesondere in der Seitenansicht der Fig. 6b gut erkennbar.

Fig. 7 zeigt verschiedene Betriebsstellungen des Greifeinsatzes mit axialen außenseitigen Stegen und sich mit diesen abwechselnden dazwischen angeordneten geschwächten Bereichen einer Packtulpe, insbesondere eines Greifeinsatzes 10 der Packtulpe 1 gemäß Fig. 1, im Querschnitt. In Fig. 7a befindet sich der Greifeinsatz 10 in Ruheposition, ist mithin nicht druckbeaufschlagt, umgibt jedoch bereits des zu ergreifenden Flaschenhals der Flasche F1.

In der in Fig. 7b dargestellten Betriebsstellung ist der Greifeinsatz 10 bereits druckbeaufschlagt, jedoch nicht mit vollem Druck. Hierbei hat sich das Ringvolumen 30 bereits deutlich vergrößert und die zwischen den axialen Stegen 13 angeordneten geschwächten Bereiche 14 haben sich mit ihren jeweiligen Mittenabschnitten 14b an den Flaschenhals angelegt, während die axialen Stege 13 annähernd noch in der Ausgangsstellung befinden. In dieser Betriebsstellung wird eine gute Vorzentrierung des Flaschenhalses erreicht und eine lotrechte Position desselben sichergestellt. Ferner können leichte Flaschen, beispielsweise solche aus PET, bereits recht sicher gegriffen werden.

In der in Fig. 7c dargestellten Betriebsstellung ist der Greifeinsatz 10 nun voll druckbeaufschlagt, so dass das Ringvolumen 30 sein Maximum erreicht hat und der Greifeinsatz 10 maximal verformt ist. Hier sind auch die axialen Stege 13 radial einwärtig an den Flaschenhals herangerückt und der Flaschenhals auch von schweren Glasflaschen wird sicher und schonend gegriffen. Die durch die Vorzentrierung erzielte lotrechte Position wird hier beibehalten und fixiert. Für das vorstehend beschriebene Greifverhalten kommt es nicht entscheidend darauf an, dass die axialen Stege gegenüber dem Kragen radial zurückversetzt sind. Es ist auch möglich, dass sie in berührendem oder sogar leicht gepresstem Kontakt mit der Innenfläche des Gehäuses stehen.

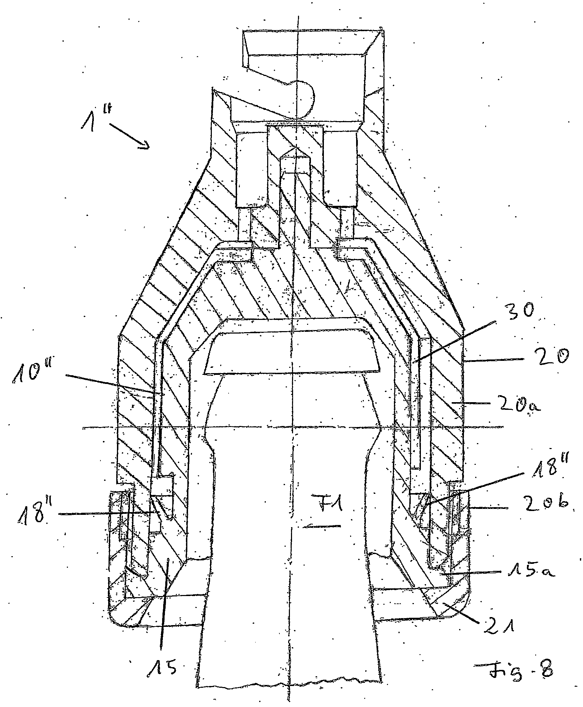

Fig. 8 zeigt eine Packtulpe 10" zum kopfseitigen Ergreifen von Flaschen F1 in einer dritten Ausführungsform im Längsschnitt. Diese Packtulpe 1" zeichnet sich dadurch aus, dass ihr Greifeinsatz 10"benachbart zum Kragen 15 an seiner Außenseite seiner Wand eine umlaufende Dichtlippe 18 aufweist. Diese Dichtlippe 18" ist vorliegend derart geformt, dass sie schräg von der Außenseite der Wand des Greifeinsatzes 10" absteht und ferner mit dem Greifeinsatz einstückig ausgebildet ist. Vorliegend legt sich die Dichtlippe 18" im eingebauten Zustand des Greifeinsatzes 10"dichtend an die Innenseite der Wand des Greifeinsatzes 10" an, wobei sie zum Zwecke einer verbesserten Elastizität vorliegend dünnwandig ausgebildet ist.

Ebenso ist es möglich, die Dichtlippe gesondert zu fertigen, wenn beispielsweise eine spezielle Elastizität gefordert ist, und sie anschließend mit dem Greifeinsatz zu verbinden (nicht dargestellt).

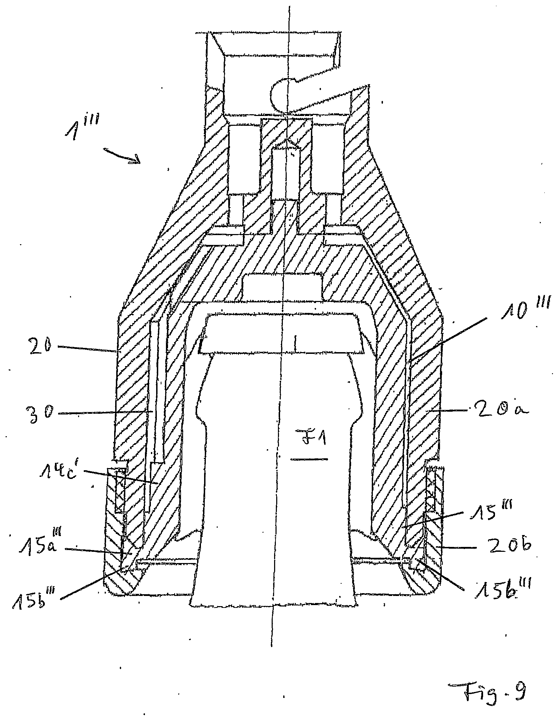

Fig. 9 zeigt eine Packtulpe 1"' zum kopfseitigen Ergreifen von Flaschen in einer vierten Ausführungsform im Längsschnitt. Diese zeichnet sich dadurch aus, dass der Greifeinsatz 1"' der Packtulpe 1"' ein speziell geformten Kragen 15'" aufweist. Im Einzelnen weist der radial außenseitig am Kragen 15'" angeordnete Ringabschnitt 15a'" in axialer Verlängerung einen Dichtwulst 15b'" aufweist. Eine besonders detaillierte Darstellung dieser Ausführungsform findet sich in Fig. 10c. Wie insbesondere dort erkennbar, wird dieser im Längsschnitt des Greifeinsatzes 10"' leicht ballig geformte Ringwulst 15b'"beim Einklemmen des Ringabschnitts 15a'" im Gehäuse 20, 20a, 20b derart komprimiert, dass er jede Unregelmäßigkeit in der Geometrie von Gehäuse 20, 20a, 20b und Greifeinsatz 10"' ausgleicht und somit für eine nahezu perfekte Dichtwirkung sorgt.

Wie ferner in Fig. 9 erkennbar, weist der Greifeinsatz 10"' auch dieser Ausführungsform an den geschwächten Bereichen 14' dreieckige Verstärkungselemente 14c' auf.

Fig. 10a-h zeigt verschiedene Packtulpen zum kopfseitigen Ergreifen von Flaschen sowie die dazugehörigen Greifeinsätze in einer Ausschnittsansicht ihres Längsschnitts.

Fig. 10a/10e zeigen eine Einzelheit der Längsschnittansicht der Packtulpe der Fig. 1, bei der die axiale Dicke des Ringabschnitts 15a des Kragens 15 unter Ausbildung eines dem rückseitigen Boden 11 des Greifeinsatzes 10 zugewandten Innenkonus sich radial nach außen stetig vergrößert. Ferner ist erkennbar, dass der Absatz 21 des ringförmigen Sicherungselementes 20b des Gehäuses 20 sich dornförmig in den Ringabschnitt 15a eindrückt.

Fig. 10b/10f zeigen eine Ausführungsform, bei der der radial außenseitig angeordnete Ringabschnitt 15a des Kragens 15 im Querschnitt eine einfache rechteckige Form hat. Zusätzlich ist eine Dichtlippe 18" oberhalb des Kragens 15 vorgesehen.

Fig. 10c/10g zeigen, wie erwähnt, eine Ausführung mit Dichtwulst 15b"', die eine optimierte Dichtwirkung ergibt und zusätzlich ein unbeabsichtigtes Aufdrehen eines als Überwurfmutter ausgebildeten Sicherungselements 20b verhindert.

Fig. 10d/10h zeigen schließlich eine Ausführung einer Packtulpe 1"", bei der der radial außenseitig angeordnete Ringabschnitt 15a"" ein T-förmiges Profil aufweist, derart, dass sich an das äußere Ende des Ringabschnitts 15a"" beidseitig Endabschnitte 15c"" in axialer Richtung anschließen. Durch diesen hierdurch erzielten Formschluss zwischen Gehäuse und Greifeinsatz wird ein besonders guter Sitz des Greifeinsatzes im Gehäuse erzielt.

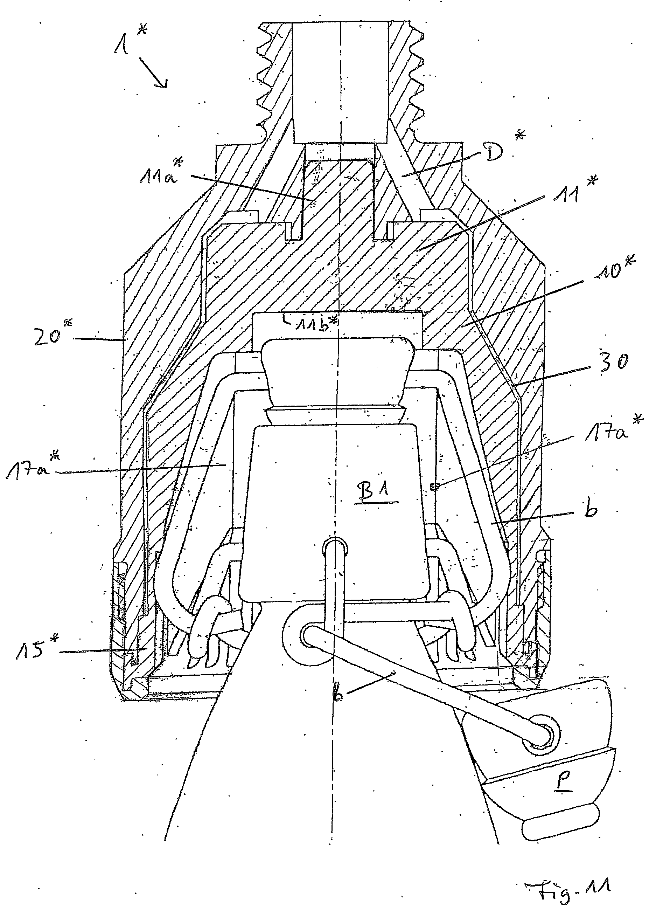

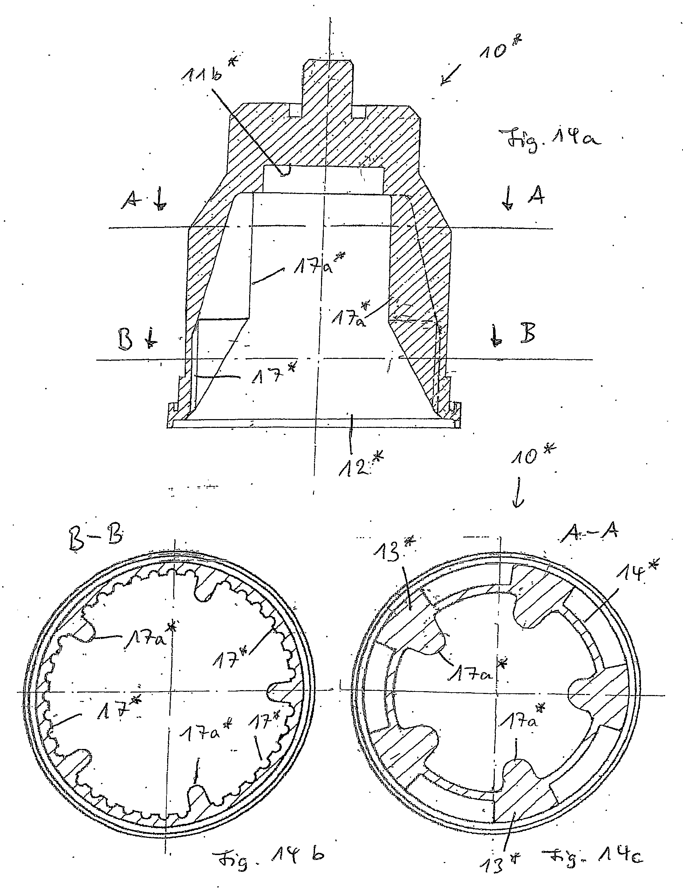

Die Fig. 11-14 zeigen weitere Ausführungsformen einer Packtulpe 1*, welche sich insbesondere zum Ergreifen von Bügelverschlussflaschen B1 eignen. Wie insbesondere den Querschnittsdarstellungen der Fig. 14 zu entnehmen ist, weist der Greifeinsatz 10* in zu den vorstehend beschriebenen Packtulpen vergleichbarer Weise außenseitige axiale Stege 13* auf, die sich mit geschwächten Bereichen 14* abwechseln. Im Bereich des vorderseitiges, dem zu ergreifenden Flaschenkopf B1 zugewandtes Ende 12* des Greifeinsatzes 10* weist dieser an seiner Innenfläche zum Zwecke des Fixierens des Bügels der Bügelverschlussflasche B1 eine axiale Zahnstruktur 17* auf. Diese ist vorliegend derart dimensioniert, dass im Betrieb der Packtulpe 1* nur die radial nach innen weisenden Oberseiten der Zähne der Zahnstruktur 17*, die naturgemäß eine Verstärkung der Wandstärke des Greifeinsatzes 10* bilden, im Kontakt mit dem Bügel b der Bügelverschlussflasche B1 stehen, so dass eine Verletzung der Wand des Greifeinsatzes 10* im Bereich der Täler der Zahnstruktur 17*, wo die Wandstärke minimal ist, sicher vermieden wird. Ferner ist in dem Greifeinsatz 10* der Fig. 11 vorgesehen, das die axiale Zahnstruktur 17* eine Mehrzahl gleichmäßig über den Umfang der Innenfläche des Greifeinsatzes 10* verteilter, die Zahnstruktur 17* radial nach innen überragender Verstärkungsrippen 17a* aufweist, wobei jedem außenseitigen Steg 13* auf der Innenseite des Greifeinsatzes 10* jeweils mittig eine Verstärkungsrippe 17a* zugeordnet ist. Vorliegend vergrößert sich die Höhe der Verstärkungsrippen 17a* in radialer Richtung vom Kragen 15* in Richtung des rückseitigen Bodens 11* des Greifeinsatzes 10* zumindest im Bereich der Zahnstruktur 17* kontinuierlich. Hierdurch wird eine sehr gute Vorzentrierung beim Einführen des Kopfes der Bügelverschlussflasche B1 erzielt. Eine abschließende Zentrierung wird im Bereich des Porzellanstopfens p kann dann durch eine spezielle an die Form und Durchmesser des Stopfens angepasste Aussparung 11b* im Boden 11* des Greifeinsatzes 10* bewirkt. Ferner sind die Verstärkungsrippen 17a* im bodennahen Abschnitt des Greifeinsatzes 10* auch in Umfangsrichtung dicker ausgebildet und weisen eine konstante Höhe auf (s. auch Fig. 14a), wodurch eine verbesserte Stabilität erzielt wird.

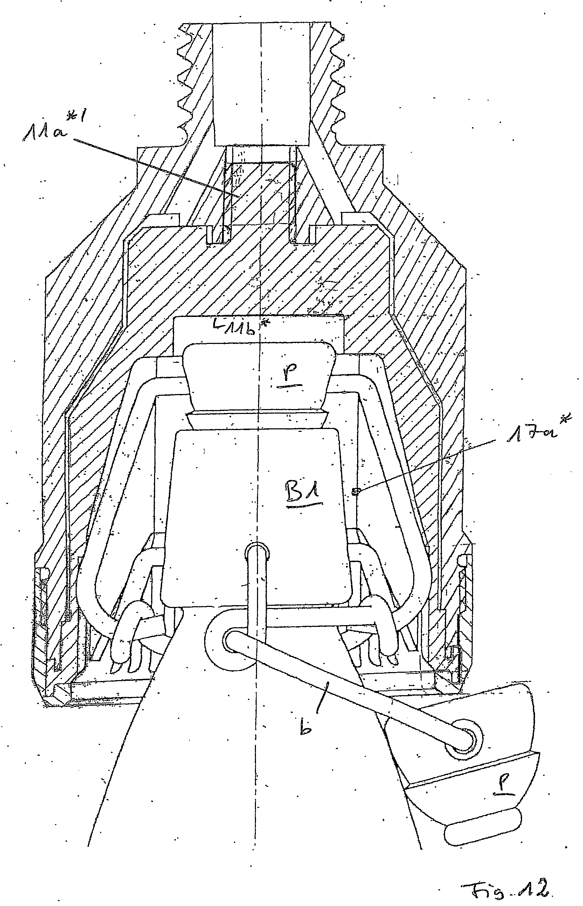

Der Greifeinsatz 10* der Packtulpe 1* der Fig. 12 unterscheidet sich von dem der Fig. 11 lediglich dadurch, dass hier der Zentrierzapfen 11a*' ein Gewinde aufweist, welches mit einem entsprechenden Gewinde im Gehäuse 20* zusammenwirkt. Dieses Merkmal ist nicht erfindungsgemäß.

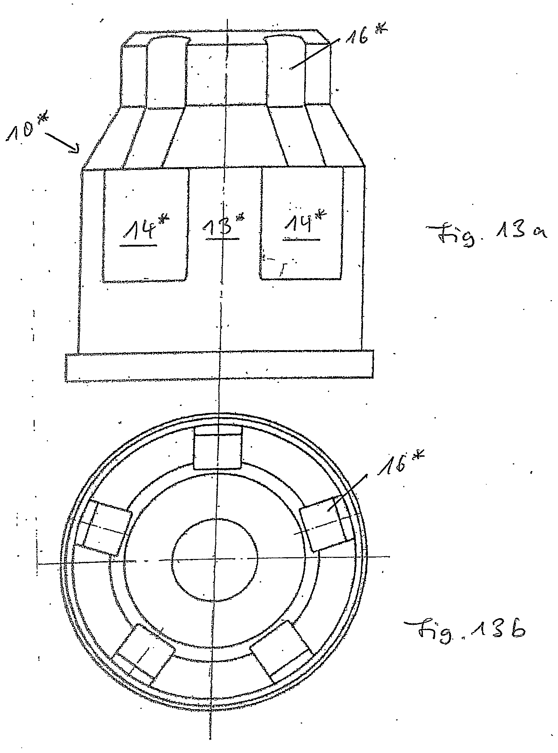

Dir. Fig. 13 zeigt der Greifeinsatz der Packtulpe aus Fig. 11 ohne Zentrierzapfen der Fig. 11 in Seitenansicht und in Draufsicht. Hier ist erkennbar, dass die geschwächten Bereiche 14* des Greifeinsatzes 10* nicht über die volle Erstreckung der Wand des Greifeinsatzes 10* ausgebildet sind, sondern die Form von Fenstern haben.

## Patentansprüche

1. Packtulpe (1) zum Ergreifen von insbesondere durch einen Verschluss verschließbaren Flaschen (F1, F2) mit einem topfförmigen Gehäuse (20) und einem topfförmigen, elastisch verformbaren Greifeinsatz (10), wobei der Greifeinsatz (10) einen rückseitigen Boden (11) und ein vorderseitiges, dem zu ergreifenden Flaschenkopf zugewandtes Ende (12) aufweist, wobei der Greifeinsatz (10) über einen an seinem vorderseitigen Ende (12) angeordneten radial nach außen weisenden Kragen (15) an einem gehäusefesten Absatz (21) abgestützt ist, wobei die Packtulpe (1) Mittel (16) zur Einleitung eines Druckmediums in ein zwischen der Innenwand des Gehäuses (20) und der Außenwand des Greifeinsatzes (10) angeordnetes Druckvolumen aufweist,
**dadurch gekennzeichnet, dass**
die zwischen den Enden (11, 12) angeordnete Wand des hülsenförmigen Greifeinsatzes (10) eine Mehrzahl über den Umfang des Greifeinsatzes (10) verteilter, in axialer Richtung sich erstreckender, außenseitiger Stege (13) umfasst, wobei sich die axialen Stege (13) über den Umfang des Greifeinsatzes (10) mit geschwächten Bereichen (14) abwechseln, wobei die axialen Stege (13) derart gegenüber dem Kragen (15) radial zurückversetzt sind, dass sich zwischen der Innenwand des Gehäuses und der Außenwand des Greifeinsatzes ein durchgehendes Ringvolumen (30) ausbildet, wobei der rückseitige Boden (11) des Greifeinsatzes (10) gegenüber dem Boden des topfförmigen Gehäuses (20) axial beweglich ausgebildet ist.

2. Packtulpe (1) nach Anspruch 2,
**dadurch gekennzeichnet, dass**
die Spaltbreite des Ringvolumens (30) zwischen der Außenseite der axialen Stege (13) und der Innenwand des Gehäuses (20) 0,2 - 1,2 mm beträgt.

3. Packtulpe (10) nach Anspruch 1 oder 2,
**dadurch gekennzeichnet, dass**
jeder geschwächte Bereich (14) zwei sich an die jeweils benachbart angeordneten axialen Stege (13) anschließende axiale Außenabschnitte (14a) und einen dazwischen angeordneten axialen Mittenabschnitt (14b) aufweist, wobei die jeweilige Wandstärke der axialen Außenabschnitte (14a) geringer ist als die Wandstärke des Mittenabschnitts (14b).

4. Packtulpe (1) nach einem der Ansprüche 1 bis 3,
**dadurch gekennzeichnet, dass**
in den geschwächten Bereichen (14') dreieckige Verstärkungselemente (14c') angeordnet sind, welche auf dem Kragen (15) in axial rückwärtiger Richtung aufsitzen.

5. Packtulpe (1) nach einem der Ansprüche 1 bis 3,
**dadurch gekennzeichnet, dass**
der Kragen (15) einen radial außenseitig angeordneten Ringabschnitt (15a) umfasst, welcher derart mit dem Gehäuse (20) in Form einer Einklemmung zusammenwirkt, dass er das Ringvolumen (30) zum vorderseitigen Ende (12) des Greifeinsatzes hin abdichtet.

6. Packtulpe (1) nach Anspruch 5,
**dadurch gekennzeichnet, dass**
das Gehäuse (20) einen topfförmigen Hauptabschnitt (20a) und eine mit dem Hauptabschnitt (20a) lösbar verbundene, insbesondere als Überwurfmutter ausgebildetes, ringförmiges Sicherungselement (20b) aufweist, wobei der gehäusefeste Absatz (21) an dem Sicherungselement (20b) ausgebildet ist, wobei der radial außenseitig angeordnete Ringabschnitt (15a) des Kragens (15) zwischen vorderem Rand des topfförmigen Hauptabschnitts (20a) und dem Sicherungselement (20b) eingespannt ist.

7. Packtulpe (1) nach Anspruch 5 oder 6,
**dadurch gekennzeichnet, dass**
der radial außenseitig angeordneten Ringabschnitt (15a) einen im Wesentlichen rechteckigen Querschnitt aufweist.

8. Packtulpe (1) nach einem der Ansprüche 5 bis 7,
**dadurch gekennzeichnet, dass**
sich die axiale Dicke des Ringabschnitts (15a) des Kragens (15) radial nach außen stetig vergrößert unter Ausbildung eines dem rückseitigen Boden (11) des Greifeinsatzes (10) zugewandten Innenkonus.

9. Packtulpe (1"') nach einem der Ansprüche 5 bis 8,
**dadurch gekennzeichnet, dass**
der radial außenseitig am Kragen (15"') angeordnete Ringabschnitt (15a'") in axialer Verlängerung einen Dichtwulst (15b'") aufweist.

10. Packtulpe (1"") nach einem der Ansprüche 5 bis 7,
**dadurch gekennzeichnet, dass**
der radial außenseitig angeordnete Ringabschnitt (15a) ein T-förmiges Profil aufweist, derart, dass sich an das äußere Ende des Ringabschnitts (15a) beidseitig Endabschnitte (15c) in axialer Richtung anschließen.

11. Packtulpe (1") nach einem der Ansprüche 1 bis 10,
**dadurch gekennzeichnet, dass**
der Greifeinsatz (10") benachbart zum Kragen (15) an seiner Außenseite seiner Wand eine umlaufende Dichtlippe (18") aufweist.

12. Packtulpe (1*) nach einem der Ansprüche 1 bis 11,
**dadurch gekennzeichnet, dass**
die Innenfläche der Wand des Greifeinsatzes (10*) im Bereich des Kragens (15) zum Zwecke des Fixierens des Bügels einer Bügelverschlussflasche eine axiale Zahnstruktur (17*) aufweist.

13. System zum kopfseitigen Ergreifen von insbesondere durch einen Verschluss verschließbaren Flaschen mit wenigstens einer Packtulpe (1, 1', 1", 1"', 1"", 1*) nach einem der Ansprüche 1 bis 12.

14. Verfahren zum kopfseitigen Ergreifen einer insbesondere durch einen Verschluss verschließbaren Flasche mithilfe einer Packtulpe, wobei die Packtulpe ein topfförmiges Gehäuse (20) und einen topfförmigen, elastisch verformbaren Greifeinsatz (10) umfasst, wobei der Greifeinsatz (10) einen rückseitigen Boden (11) und ein vorderseitiges, dem zu ergreifenden Flaschenkopf zugewandtes Ende (12) aufweist, wobei der Greifeinsatz (10) über einen an seinem vorderseitigen Ende (12) angeordneten radial nach außen weisenden Kragen (15) an einem gehäusefesten Absatz (21) abgestützt ist, wobei die Packtulpe (1) Mittel (16) zur Einleitung eines Druckmediums in ein zwischen der Innenwand des Gehäuses (20) und der Außenwand des Greifeinsatzes (10) angeordnetes Druckvolumen aufweist
**dadurch gekennzeichnet, dass**
die zwischen den Enden (11, 12) des Greifeinsatzes (10) angeordnete Wand des hülsenförmigen Greifeinsatzes (10) eine Mehrzahl über den Umfang des Greifeinsatzes (10) verteilter, in axialer Richtung sich erstreckender, außenseitiger Stege (13) umfasst, wobei sich die axialen Stege (13) über den Umfang des Greifeinsatzes (10) mit geschwächten Bereichen (14) abwechseln, wobei die axialen Stege (13) derart gegenüber dem Kragen (15) radial zurückversetzt sind, dass sich zwischen der Innenwand des Gehäuses und der Außenwand des Greifeinsatzes ein durchgehendes Ringvolumen (30) ausbildet und wobei der rückseitige Boden (11) des Greifeinsatzes (10) gegenüber dem Boden des topfförmigen Gehäuses (20) axial beweglich ausgebildet ist, wobei in einem ersten Verfahrensschritt bei Einleitung des Druckmediums sich zunächst die geschwächten Bereiche (14) radial einwärtig verformen und an den zu greifenden Flaschenhals anlegen, während sich die axialen Stege (13) annähernd noch in der Ausgangsstellung befinden, und wobei in einem zweiten Verfahrensschritt bei weiterer Erhöhung des Drucks im Druckmedium auch die axialen Stege (13) radial einwärtig an den Flaschenhals heranrücken.

## Claims

1. A gripping head (1) for gripping bottles (F1, F2), closable in particular by means of a closure and having a pot-shaped housing (20) and a pot-shaped elastically deformable gripping insert (10), the gripping insert (10) having a rear base (11) and a front end (12) facing the top of the bottle, which is to be gripped, the gripping insert (10) being supported on a step (21), which is fixed to the housing, by means of a radially outwardly facing collar (15) which is arranged at the front end (12) of the gripping insert, and the gripping head (1) having means (16) for introducing a pressure medium into a pressure volume arranged between the inner wall of the housing (20) and the outer wall of the gripping insert (10),
**characterized in that**
the wall of the sleeve-shaped gripping insert (10), arranged between the ends (11, 12), comprises a plurality of external webs (13) distributed over the circumference of the gripping insert (10) and extending in the axial direction, wherein the axial webs (13) alternate with weakened regions (14) over the circumference of the gripping insert (10), wherein the axial webs (13) are radially set back compared to the collar (15) such that a continuous annular volume (30) is formed between the inner wall of the housing and the outer wall of the gripping insert, wherein the rear base (11) of the gripping insert (10) is formed in an axially movable manner with respect to the base of the pot-shaped housing (20).

2. The gripping head (1) according to Claim 2,
**characterized in that**
the gap width of the annular volume (30) between the exterior of the axial webs (13) and the inner wall of the housing (20) is 0.2-1.2 mm.

3. The gripping head (10) according to Claim 1 or 2,
**characterized in that**
each weakened region (14) has two axial outer sections (14a), adjoining the respectively adjacently arranged axial webs (13), and a central section (14b) arranged therebetween, wherein the respective wall thickness of the axial outer sections (14a) is smaller than the wall thickness of the central section (14b).

4. The gripping head (1) according to one of Claims 1 to 3,
**characterized in that**
triangular reinforcing elements (14c') are arranged in the weakened regions (14'), which reinforcing elements sit on the collar (15) in the axially rearward direction.

5. The gripping head (1) according to one of Claims 1 to 3,
**characterized in that**
the collar (15) comprises a radially externally arranged annular section (15a) which interacts in the form of clamping with the housing (20) such that the annular section seals the annular volume (30) towards the front end (12) of the gripping insert.

6. The gripping head (1) according to Claim 5,
**characterized in that**
the housing (20) has a pot-shaped main section (20a) and an annular securing element (20b) which is connected to the main section (20a) in a detachable manner and in particular is constructed as a union nut, wherein the step (21), which is fixed to the housing, is constructed on the securing element (20b), wherein the radially externally arranged annular section (15a) of the collar (15) is clamped between the front edge of the pot-shaped main section (20a) and the securing element (20b).

7. The gripping head (1) according to Claim 5 or 6,
**characterized in that**
the radially externally arranged annular section (15a) has a substantially rectangular cross section.

8. The gripping head (1) according to one of Claims 5 to 7,
**characterized in that**
the axial thickness of the annular section (15a) of the collar (15) increases steadily radially outwards with the formation of an internal cone facing the rear base (11) of the gripping insert (10).

9. The gripping head (1'") according to one of Claims 5 to 8,
**characterized in that**
the annular section (15a''') arranged radially externally on the collar (15''') has a sealing bead (15b''') as axial extension.

10. The gripping head (1"") according to one of Claims 5 to 7,
**characterized in that**
the radially externally arranged annular section (15a) has a T-shaped profile such that end sections (15c) adjoin the outer end of the annular section (15a) on both sides in the axial direction.

11. The gripping head (1") according to one of Claims 1 to 10,
**characterized in that**
the gripping insert (10") has a peripheral sealing lip (18") adjacent to the collar (15) on the outside of the wall thereof.

12. The gripping head (1*) according to one of Claims 1 to 11,
**characterized in that**
the inner surface of the wall of the gripping insert (10*) has an axial tooth structure (17*) in the region of the collar (15) for the purpose of fixing the clip of a swing-stopper bottle.

13. A system for the top-side gripping of bottles, closable in particular by means of a closure, having at least one gripping head (1, 1', 1'', 1''', 1'''', 1*) according to one of Claims 1 to 12.

14. A method for top-side gripping of a bottle, closable in particular by means of a closure, with the aid of a gripping head, the gripping head comprising a pot-shaped housing (20) and a pot-shaped elastically deformable gripping insert (10), the gripping insert (10) having a rear base (11) and a front end (12) facing the top of the bottle, which is to be gripped, the gripping insert (10) being supported on a step (21), which is fixed to the housing, by means of a radially outwardly facing collar (15) which is arranged at the front end (12) of the gripping insert, and the gripping head (1) having means (16) for introducing a pressure medium into a pressure volume arranged between the inner wall of the housing (20) and the outer wall of the gripping insert (10),
**characterized in that**
the wall of the sleeve-shaped gripping insert (10), arranged between the ends (11, 12) of the gripping insert (10), comprises a plurality of external webs (13) distributed over the circumference of the gripping insert (10) and extending in the axial direction, wherein the axial webs (13) alternate with weakened regions (14) over the circumference of the gripping insert (10), wherein the axial webs (13) are radially set back compared to the collar (15) such that a continuous annular volume (30) is formed between the inner wall of the housing and the outer wall of the gripping insert, and wherein the rear base (11) of the gripping insert (10) is formed in an axially movable manner with respect to the base of the pot-shaped housing (20), wherein in a first method step, during the introduction of the pressure medium, the weakened regions (14) first deform inwards and bear against the bottleneck to be gripped, whilst the axial webs (13) are still located approximately in the initial position, and wherein in a second method step, upon further increase of the pressure in the pressure medium, the axial webs (13) also move radially inwards and closer to the bottleneck.

## Revendications

1. Tulipe de préhension (1) permettant la saisie en particulier de bouteilles (F1,F2) pouvant être fermées par un bouchon avec un boîtier (20) en forme de manchon et un insert de préhension (10) à déformation élastique en forme de manchon, l'insert de préhension (10) comportant un fond arrière (11) et une extrémité avant (12) tournée vers le goulot de bouteille à saisir, l'insert de préhension (10) prenant appui sur un collet (15) disposé sur son extrémité avant (12) tourné radialement vers l'extérieur sur un décrochement (21) fixe au boîtier, la tulipe de préhension (1) comportant des moyens (16) pour introduire un milieu sous pression dans un volume sous pression disposé entre la paroi intérieure du boîtier (20) et la paroi extérieure de l'insert de préhension (10)
**caractérisée en ce que**
la paroi de l'insert de préhension (10) en forme de manchon disposée entre les extrémités (11,12) comprend une pluralité de nervures (13) extérieures réparties sur la périphérie de l'insert de préhension (10), s'étendant dans la direction axiale, les nervures axiales (13) alternant sur la périphérie de l'insert de préhension (10) avec des zones affaiblies (14), les nervures axiales (13) étant radialement décalées en arrière par rapport au collet (15) de telle manière qu'il est formé un volume annulaire (30) continu entre la paroi intérieure du boîtier et la paroi extérieure de l'insert de préhension, le fond arrière (11) de l'insert de préhension (10) étant constitué axialement mobile par rapport au fond du boîtier en forme de manchon (20).

2. Tulipe de préhension (1) selon la revendication 2,
**caractérisée en ce que** la largeur de fente du volume annulaire (30) est de 0,2-1,2 mm entre le côté extérieur des nervures axiales (13) et la paroi intérieure du boîtier (20).

3. Tulipe de préhension (10) selon la revendication 1 ou 2, **caractérisée en ce que** chaque zone atténuée (14) comporte deux sections extérieures (14a) axiales se raccordant aux nervures (13) axiales disposées respectivement adjacentes et une section centrale (14b) axiale disposée entre elles, l'épaisseur de paroi respective des sections extérieures axiales (14a) étant plus faible que l'épaisseur de paroi de la section centrale (14b).

4. Tulipe de préhension (1) selon l'une quelconque des revendications 1 à 3, **caractérisée en ce que** dans les zones affaiblies (14') sont disposés des éléments de renfort triangulaires (14c'), lesquels reposent sur le collet (15) en direction axialement en arrière.

5. Tulipe de préhension (1) selon l'une quelconque des revendications 1 à 3, **caractérisée en ce que** le collet (15) comprend une section annulaire (15a) disposée radialement à l'extérieur, laquelle coopère avec le boîtier (20) sous la forme d'un pincement de telle manière qu'elle étanchéifie le volume annulaire (30) à l'extrémité avant (12) de l'insert de préhension.

6. Tulipe de préhension (1) selon la revendication 5,
**caractérisée en ce que** le boîtier (20) comporte une section principale (20a) en forme de manchon et un élément de fixation (20b) de forme annulaire, relié détachable à la section principale (20a), constitué notamment comme un écrou à chapeau, le décrochement (21) fixe au boîtier étant constitué sur l'élément de fixation (20b), la section annulaire (15a) du collet (15) disposée radialement à l'extérieur étant serrée entre le bord avant de la section principale en forme de manchon (20a) et l'élément de fixation (20b).

7. Tulipe de préhension (1) selon la revendication 5 ou 6, **caractérisée en ce que** la section annulaire (15a) disposée radialement à l'extérieur comporte une section transversale pour l'essentiel rectangulaire.

8. Tulipe de préhension (1) selon l'une quelconque des revendications 5 à 7, **caractérisée en ce que** l'épaisseur axiale de la section annulaire (15a) du collet (15) augmente en continu radialement vers l'extérieur en formant un cône intérieur tourné vers le fond arrière (11) de l'insert de préhension (10).

9. Tulipe de préhension (1''') selon l'une quelconque des revendications 5 à 8, **caractérisée en ce que** la section annulaire (15a''') disposée radialement à l'extérieur sur le collet (15''') comporte un bourrelet d'étanchéité (15b''') dans le prolongement axial.

10. Tulipe de préhension (1"") selon l'une quelconque des revendications 5 à 7, **caractérisée en ce que** la section annulaire (15a''') disposée radialement à l'extérieur comporte un profil en forme de T de telle manière que les sections d'extrémité (15c) des deux côtés se raccordent à l'extrémité extérieure de la section annulaire (15a) dans la direction axiale.

11. Tulipe de préhension (1'') selon l'une quelconque des revendications 1 à 10, **caractérisée en ce que** l'insert de préhension (10'') adjacent au collet (15) comporte une lèvre d'étanchéité périphérique (18'') sur son côté extérieur de sa paroi.

12. Tulipe de préhension (1*) selon l'une quelconque des revendications 1 à 11, **caractérisée en ce que** la surface intérieure de la paroi de l'insert de préhension (10*) comporte dans la zone du collet (15) une structure dentée axiale (17*) dans le but de fixer l'étrier d'une bouteille à bouchon mécanique.

13. Système pour la préhension côté goulot d'une bouteille pouvant être fermée en particulier avec un bouchon avec au moins une tulipe de préhension (1,1',1",1'",1"",1*) selon l'une quelconque des revendications 1 à 12.

14. Procédé pour la saisie côté goulot d'une bouteille pouvant être fermée en particulier par un bouchon à l'aide d'une tulipe de préhension, la tulipe de préhension comprenant un boîtier en forme de manchon (20) et un insert de préhension (10) à déformation élastique en forme de manchon, l'insert de préhension (10) comportant un fond arrière (11), une extrémité avant (12) tournée vers le goulot de bouteille à saisir, l'insert de préhension (10) prenant appui sur un collet (15) disposé sur son extrémité avant (12) tourné radialement vers l'extérieur sur un décrochement (21) fixe au boîtier, la tulipe de préhension (1) comportant des moyens (16) pour introduire un milieu sous pression dans un volume sous pression disposé entre la paroi intérieure du boîtier (20) et la paroi extérieure de l'insert de préhension (10)
**caractérisé en ce que**
la paroi de l'insert de préhension (10) en forme de manchon disposée entre les extrémités (11,12) de l'insert de préhension (10) comprend une pluralité de nervures (13) extérieures réparties sur la périphérie de l'insert de préhension (10), s'étendant dans la direction axiale, les nervures axiales (13) alternant sur la périphérie de l'insert de préhension (10) avec des zones affaiblies (14), les nervures axiales (13) étant radialement décalées en arrière par rapport au collet (15) de telle manière qu'il est formé un volume annulaire (30) continu entre la paroi intérieure du boîtier et la paroi extérieure de l'insert de préhension, le fond arrière (11) de l'insert de préhension (10) étant constitué axialement mobile par rapport au fond du boîtier en forme de manchon (20), dans une première étape de procédé, les zones affaiblies (14) se déformant d'abord radialement vers l'intérieur lors de l'introduction du milieu sous pression et venant s'appliquer au goulot de bouteille à saisir, tandis que les nervures axiales (13) se trouvent encore à peu près dans la position initiale et dans une deuxième étape de procédé les nervures axiales (13) se rapprochant également radialement vers l'intérieur sur le goulot de bouteille lorsque la pression augmente encore dans le milieu de pression.
